# EUROPEAN PATENT APPLICATION

(11) **EP 0 703 052 A1**
(43) Date of publication of application: **27.03.1996**
(21) Application number: 95114822.0
(22) Date of filing: 20.09.1995
(51) Int. Cl.: B29C 45/26, B29C 45/27, B29C 45/00

(54) **Injection mold for IC cards**

(30) Priority: 22.09.1994 JP 227527/94
(71) Applicant: RHYTHM WATCH CO., LTD., Tokyo (JP)
(72) Inventor: Arai, Yuji, c/o Showakojo, Rhythm Watch Co., Ltd., Kitakatsushika-gun, Saitama-Pref. (JP)
(74) Representative: Grünecker, Kinkeldey, Stockmair & Schwanhäusser Anwaltssozietät

(57) **Abstract**

An injection mold has a fixed mold (14) having a backing plate (41) and a movable mold (15). A cavity (16) is formed between the fixed mold and the movable mold. A sprue bush (44) is provided in the fixed mold (14) to form a sprue (43). A gate (17) is provided for communicating the sprue (43) with the cavity. A hole (42a,41a,41b) is formed in the fixed mold assembly (14a), which is communicated with the sprue (43) of. A nozzle (2a) of an injection molding machine is inserted in the hole (42a,41a,41b).

## Description

### BACKGROUND OF THE INVENTION

The present invention relates to an injection mold for molding IC cards by an injection molding machine.

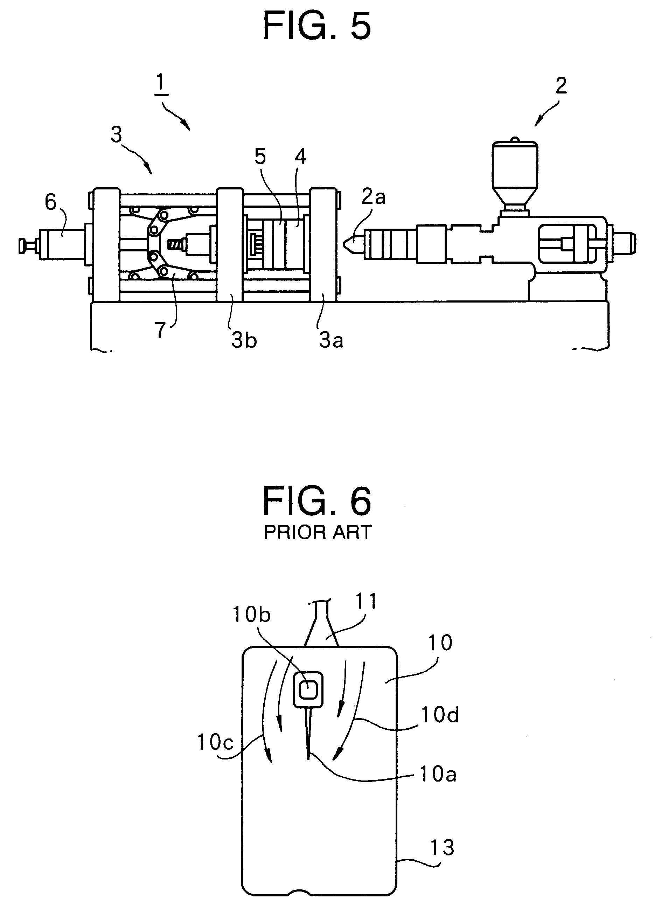

Fig. 5 shows an injection molding machine 1 which comprises an injection unit 2 having a nozzle 2a, and a mold clamping mechanism 3. The mold clamping mechanism 3 comprises a fixed platen 3a, a movable platen 3b, a fixed mold 4 secured to the fixed platen 3a, and a movable mold 5 secured to the movable platen 3b. A hydraulic cylinder 6 is connected to the movable platen 3b through a toggle 7 so as to move the movable platen.

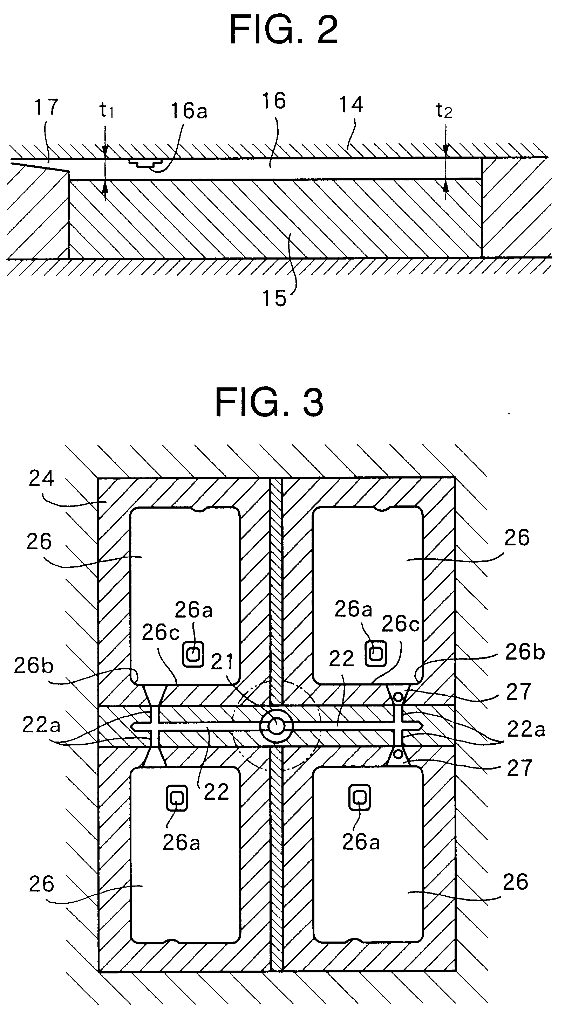

Either of the fixed mold 4 or the movable mold 5 has a rectangular recess to form a cavity between the fixed mold and the movable mold when the movable mold 5 is engaged with the fixed mold 4 for molding an IC card. On a base portion of the cavity, a projecting portion 16a (Fig. 2) is formed for forming a recess 10b (Fig. 6) in which a module of the IC card is engaged. A sprue is formed in the mold to be communicated with the cavity so that molten resin ejected from the nozzle 2a of the injection unit 2 is fed to the cavity passing through the sprue.

In injection molding, the cylinder 6 is operated to move the movable platen 3b to the fixed platen 3a through the toggle 7 so that the movable mold 5 is engaged with the fixed mold 4. The nozzle 2a of the injection unit 2 is moved to engage with the fixed mold 4, and molten resin is ejected from the nozzle 2a and poured in the cavity through the sprue at a high pressure. Thus, a plastic IC card is molded in the cavity.

After molding, the cylinder is operated so as to disengage the movable mold 5 from the fixed mold 4. Thus, the molded plastic IC card is removed from the cavity.

In the injection molding, it is desirable to reduce the amount of the resin to be used, to improve the yield of products, and to mold the IC card with a high quality.

For example, if the length of the sprue is shortened, the cavity is charged with the molten resin at a moment, so that an IC card having a high quality can be molded. Furthermore, since the residual of the molten resin in the sprue is reduced, thereby decreasing consumption of resin.

On the other hand, in order to increase the strength of the mold, a backing plate is attached to the mold, causing the thickness of the mold to increase. Since, it is necessary to form a sprue in the backing plate, the length of the sprue is increased. As a result, the above described advantages dependent on the short sprue can not be effected.

Furthermore, when the molten resin is poured in the cavity through the gate, the resin is liable to remain in a base portion near the gate. Accordingly, thickness of a fore end portion of the IC card becomes small. In order to provide a card having a high quality, it is necessary to uniform the thickness of the molded card.

The IC card is required to have a sufficient bending strength. In order to examine the bending strength of the molded card, a bending test has been conducted to bend the card about a longitudinal axis and a lateral axis.

Fig. 6 shows a plastic IC card 10 molded in a cavity 13. On the IC card 10, the recess 10b is formed by the projecting portion 16a for mounting the IC module. A weld mark 10a is liable to be formed along a confluent line between opposite flows 10c and 10d divided by the projection portion 16a. Such a weld mark coincides with a longitudinal line of the card which is perpendicular to a lateral bending moment. Consequently, the card may be easily bent.

It is necessary to avoid the weld mark 10a from coinciding with the direction perpendicular to the bending moment.

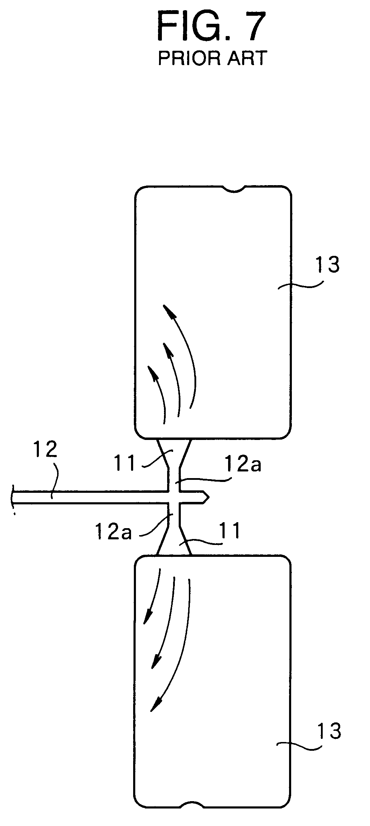

Fig. 7 shows another conventional injection mold in which a pair of cavities 13 are provided in the mold. A runner 12 connected to a sprue (not shown) and having a pair of branch runners 12a is provided between the cavities 13. A gate 11 is provided on an end of each branch runner 12a to be communicated with the cavity 13 at an offset position.

When the molten resin is fed in the runner 12, the resin is turned at the branch runners 12a in the opposite directions and ejected from the respective gates 11 to the cavities 13. The ejected molten resin is distributed in the cavity 13 as shown by arrows, in a curve due to the runners bent at 90 degrees. Therefore, a right area of the cavity 13 in Fig. 7 is liable not to be charged with the resin. Accordingly, the IC card having a high quality is not molded.

### SUMMARY OF THE INVENTION

An object of the present invention is to provide an injection mold which may produce an IC card having a high quality.

According to the present invention, there is provided an injection mold for an IC card comprising a fixed mold, a movable mold, the fixed mold and the movable mold being provided to form a cavity having a projecting portion for forming a recess on an IC card to be molded, a sprue bush provided in the fixed mold to form a sprue therein, a gate for communicating the sprue with the cavity.

A hole is formed in the fixed mold, which is communicated with the sprue and in which a nozzle of an injection molding machine is inserted.

An interval of the cavity at a front portion near the gate is set to a thickness of the IC card, and an interval of the cavity at an end opposite to the gate is larger than the interval at the front portion.

The gate is located at a position deviated from a position corresponding to the projecting portion.

A runner is communicated with the sprue, and a branch runner is communicated with the runner and the gate. The branch runner makes 90 degrees with the runner. The gate is positioned near an interior end corner of a bottom line of the cavity.

These and other objects and features of the present invention will become more apparent from the following detailed description with reference to the accompanying drawings.

### BRIEF DESCRIPTION OF DRAWINGS

Fig. 1 is a sectional view showing an injection mold for an IC cared to which the present invention is applied;
Fig. 2 is a sectional view showing a cavity formed in the mold;
Fig. 3 is a sectional plan view showing another embodiment of the present invention;
Fig. 4 is a schematic explanatory view showing a flow of molten resin in the cavity;
Fig. 5 is a side view showing an injection molding machine;
Fig. 6 is a plan view showing a conventional IC card; and
Fig. 7 is a schematic explanatory view showing a flow of molten resin in a cavity of a conventional mold.

### DETAILED DESCRIPTION OF THE PREFERRED EMBODIMENTS

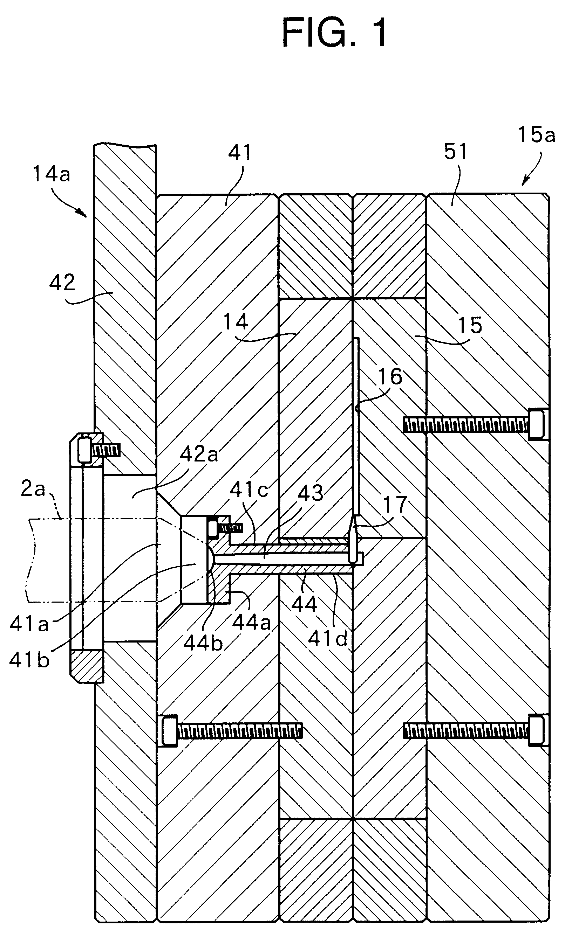

Referring to Fig. 1 showing an injection mold of the present invention, parts which are the same as the machine shown in Fig. 5 are identified with the same reference numerals as Fig. 5.

The injection mold has a fixed mold assembly 14a and a movable mold assembly 15a. The fixed mold assembly 14a comprises a fixed mold 14, a backing plate 41 secured to the fixed mold 14, and a bottom plate 42 secured to the backing plate 41. The bottom plate 42 is attached to the fixed platen 3a of the mold clamping mechanism 3 (Fig. 5). The movable mold assembly 15a has a movable mold 15 secured to a backing plate 51 which is attached to the movable platen 3b. The movable mold 15 has a recess so as to form a cavity 16 between the molds 14 and 15. The backing plates 41 and 51 are provided for reinforcing the molds 14 and 15, respectively. On the fixed mold 14, a projecting portion 16a (Fig. 2) is provided for forming the recess 10b of the IC card 10 (Fig. 6).

The bottom plate 42 has an opening 42a formed corresponding to the nozzle 2a of the injection unit 2. The backing plate 41 has a conical hole 41a having an inner cylindrical hole 41b corresponding to the opening 42a of the bottom plate 42. A hole 41c is formed in the backing plate 41 to be communicated with the inner hole 41b and communicated with a hole 41d in the fixed mold 14.

A sprue bush 44 having a sprue 43 is inserted into the hole 41b and the holes 41c and 41d. A flange 44a of the sprue bush 44 is engaged with a base portion of the inner hole 41b and secured thereto with bolts. The flange 44a has a recess 44b to be engaged with an end of the nozzle 2a. An inner end of the sprue 43 is communicated with a gate 17 which is communicated with the cavity 16.

In injection molding, the nozzle 2a is inserted into opening 42a and holes 41a and 41b and engaged with the recess 44b of the sprue bush 44. The nozzle ejects the molten resin to the sprue 43 from which the resin is fed to the cavity 16 through the gate 17.

In the embodiment, the bottom plate 42 and the backing plate 41 of the fixed mold 14 have the opening 42a and the holes 41a and 41b in which the nozzle 2a of the injection unit 2 is inserted. Therefore, even if the thickness of the mold is increased because of the bottom plate and the backing plate, the length of the sprue 43 can be reduced. Since the length of the sprue is shortened, the cavity is charged with the molten resin at a moment. Consequently, the IC card is molded with a high quality. Furthermore, the residual of the molten resin in the sprue is reduced to reduce the consumption of the resin.

Fig. 2 shows the cavity 16 formed between the molds 14 and 15. The molded IC card has the thickness of 0.81 mm. Accordingly, the interval t1 of the cavity 16 near the gate 17 is set to 0.81 mm. However, the interval t2 at the end opposite to the gate is set to 0.83 mm which is larger than the thickness of the IC card.

As aforementioned, if the depth of the cavity 16 is uniformly set to 0.81 mm, the IC card having a uniform thickness of 0.81 mm is not molded. It has been found that the thickness of the molded IC card is reduced to 0.79 mm at the interval t2 of the cavity.

Consequently, in the embodiment, the depth of the cavity 16 is set in a different value in dependency on the position in the cavity with respect to the gate 17. The depth of the cavity at the interval t2 away from the gate is set larger than the thickness of the card for supplementing the thickness, thereby preventing the thickness from unequally reducing.

Fig. 3 shows another embodiment of the present invention. A fixed mold 24 has four cavities 26 each of which has a projecting portion 26a. A sprue 21 is provided at a central portion of the mold. A pair of runners 22 are provided between upper and lower cavities 26 to be communicated with the sprue 21 in parallel with a bottom line 26c of the cavity 26. Each runner 22 has a pair of branch runners 22a provided at an end portion thereof to be symmetrically extended in the perpendicular directions toward the cavities. A gate 27 is provided on an end portion of the branch runner 22a to be communicated with the cavity 26, at a position downstream of the projecting portion 26a and near an interior end corner 26b of the bottom line 26c.

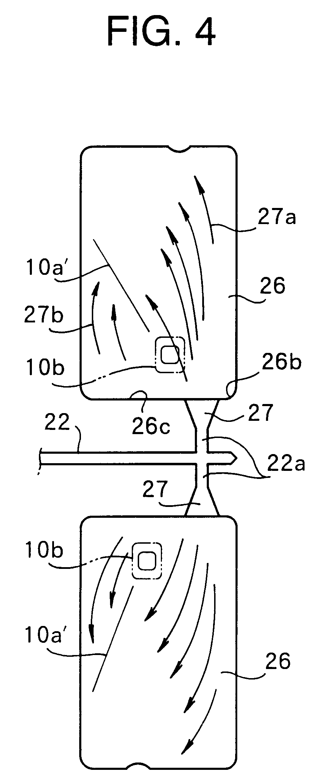

Since each gate 27 is provided at the end portion of the runner 22, downstream of the projecting portion 26a, flows 27a and 27b divided by the projecting portion 26a flow obliquely in the diagonal direction as shown in Fig. 4. As a result, a weld mark 10a' is formed between the flows 27a and 27b of the resin in the diagonal direction. Consequently, the weld mark does not coincide with the direction perpendicular to the bending moment, thereby preventing the card from being bent.

Since the main curved flow 27a flows to the central portion of the cavity 26, the molten resin is entirely fed in the cavity 26. Therefore, the cavity is uniformly filled with the molten resin at the even thickness. Thus, the card having a high quality is obtained. Since the branch runners 22a are symmetrically provided on the runner 22, the molten resin is uniformly and effectively fed in the branch runners.

In accordance with the present invention, the bottom plate and the backing plate of the fixed mold have the opening and the holes in which the nozzle of the injection unit is inserted. Therefore, even if the thickness of the mold is increased because of the bottom plate and the backing plate, the length of the sprue can be reduced. Since the length of the sprue is shortened, the cavity is charged with the molten resin at a moment. Consequently, the IC card having a high quality can be provided. Furthermore, the residual of the molten resin in the sprue is reduced to reduce the consumption of the resin.

The depth of the cavity at the distance away from the gate is set larger than the thickness of the card for supplementing the thickness, thereby preventing the thickness from unequally reducing.

Since the gate is provided downstream of the projecting portion, a weld mark is formed in the diagonal direction. Consequently, the weld mark does not coincide with the direction perpendicular to the bending moment, thereby preventing the card from being bent.

Furthermore, the molten resin is entirely fed in the cavity, the cavity is uniformly filled with the molten resin at the even thickness. Thus, the card having a high quality is obtained. Since the branch runners are symmetrically provided on the runner, the molten resin is uniformly and effectively fed in the branch runners.

While the invention has been described in conjunction with preferred specific embodiment thereof, it will be understood that this description is intended to illustrate and not limit the scope of the invention, which is defined by the following claims.

## Claims

1. An injection mold for an IC card comprising:
a fixed mold assembly;
a movable mold assembly;
the fixed mold assembly and the movable mold assembly being provided to form a cavity having a projecting portion for forming a recess on an IC card to be molded;
a sprue bush provided in the fixed mold assembly to form a sprue therein;
a gate for communicating the sprue with the cavity;
means for increasing injection efficiency.

2. The injection mold according to claim 1 wherein the means is a hole formed in the fixed mold assembly, which is communicated with the sprue and in which a nozzle of an injection molding machine is inserted.

3. The injection mold according to claim 1 wherein the means is a fact that an interval of the cavity at a front portion near the gate is set to a thickness of the IC card, and an interval of the cavity at an end opposite to the gate is larger than the interval at the front portion.

4. An injection mold for an IC card comprising:
a fixed mold assembly;
a movable mold assembly;
the fixed mold assembly and the movable mold assembly being provided to form a cavity having a projecting portion for forming a recess on an IC card to be molded;
a sprue bush provided in the fixed mold assembly to form a sprue therein;
a gate for communicating the sprue with the cavity, the gate being located at a position deviated from a position corresponding to the projecting portion.

5. The injection mold according to claim 4 further comprising a runner communicated with the sprue, and a branch runner communicated with the runner and the gate, the branch runner making 90 degrees with the runner, and the gate being positioned near an interior end corner of a bottom line of the cavity.

6. The injection mold according to claim 5 wherein the gate is positioned downstream of the projecting portion.
